# EUROPEAN PATENT APPLICATION

(11) **EP 2 275 388 A1**
(43) Date of publication of application: **19.01.2011**
(21) Application number: 10152466.8
(22) Date of filing: 03.02.2010
(51) Int. Cl.: C03B 33/03

(54) **Method for handling and cutting a plurality of plate pieces, and machine used therefor**

(30) Priority: 12.05.2009 IT MI20090810
(71) Applicant: Macotec S.R.L., 23010 Rogolo, (SO) (IT)
(72) Inventor: Colli, Maurizio, 23019, TRAONA SO (IT)
(74) Representative: Modiano, Micaela Nadia

(57) **Abstract**

A method for handling and cutting a plurality of plate pieces, which comprises the steps of cutting a first plate piece (6) from a plate (3) made of glass and the like and rotating the first piece (6) substantially by 90°, placing the first piece (6) in a parking region (10) outside the handling region of the plate (3), cutting and rotating a second plate piece (7) substantially by 90°, arranging the first plate piece (6) side by side with respect to the second plate piece (7) with placements independent of each other and performing, with a single pass of the cutting head, the cutting of the first piece (6) and of the second piece (7).

## Description

The present invention relates to a method for handling and cutting a plurality of plate pieces and to the machine used therefor.

As is known, in machines for cutting glass plates in general and laminated glass in particular it is possible to perform transverse cuts, i.e., along a direction which is substantially perpendicular to the direction of advancement of the plate, in order to obtain plate pieces which are then rotated in a substantially perpendicular direction in order to perform the subsequent cuts, always along the same direction that is defined, in practice, by the cutting head which moves on a fixed bridge.

Consequently, the various plate pieces are obtained in practice by performing the cuts along two mutually perpendicular directions, by providing a first cut and subsequently turning the obtained piece, so as to obtain the intended size.

Considering horizontal machines with a single cutting bridge, the working cycle provides for performing a first cut along a transverse direction, rotating the resulting plate piece, and performing the remaining cuts along the same transverse direction, which however, because of the rotation of the plate piece in a perpendicular direction, are perpendicular to the first cut.

Regardless of the degree of automation of the machine, attention must be called to the strong limitation of production capacity with single-bridge horizontal lines, due to the fact that it is possible to perform just one transverse motion at a time. In fact, the cutting bridge must first cut the plate piece from the larger plate and then divide it further.

For solving the problem, double-bridge horizontal lines have already been devised in which the cuts along the transverse direction are performed by means of a first bridge, whereas the cuts along the perpendicular direction on the piece are provided by means of a second bridge arranged at right angles to the first bridge.

In practice, with this type of machine, it is possible to place a plurality of plate pieces side by side, at the second bridge, so as to perform, with a single pass, the cutting of several plates, according to a type of embodiment which, for the sake of convenience, is termed simultaneous cutting, although all the various plate pieces arranged side by side are cut in succession, but during the same pass of the cutting head.

This type of machine has the advantage of greater productivity, but the disadvantage of a significantly greater space occupation of the line and a higher cost of the machine, which make it scarcely competitive on the market.

The aim of the invention is to eliminate the drawbacks cited above by providing a method for handling and cutting a plurality of plate pieces simultaneously on a horizontal machine with a single bridge, with the possibility of providing, with simple modifications of existing machines, the side-by-side arrangement of plate pieces which are then further cut along a perpendicular direction during a single pass of the cutting head, thus providing a cut which, for the sake of simplicity, is termed simultaneous.

Within this aim, an object of the invention is to be able to place the various plate pieces according to the contingent requirements, consequently reducing production times and thus contributing to cost reduction.

Another object of the present invention is to provide a horizontal machine with a single bridge which, thanks to its particular constructive characteristics, is capable of ensuring highest reliability and safety of use.

Another object of the invention is to provide a machine that can be obtained easily starting from commonly commercially available elements and materials and is also competitive from a merely economical point of view.

This aim, as well as these and other objects which will become better apparent hereinafter, are achieved by a method for handling and cutting a plurality of plate pieces simultaneously on a horizontal machine with a single bridge, which comprises the steps of cutting, from a plate made of glass and the like, a first plate piece and rotating said first piece substantially by 90°, **characterized in that** it further comprises the steps of placing said first piece in a parking region outside the handling region of said plate, cutting and rotating substantially by 90° at least one second plate piece, arranging said first plate piece side by side with respect to said at least one second plate piece with mutually independent placements and performing, with a single pass of the cutting head, the cutting of said first piece and of said at least one second piece.

Further characteristics and advantages of the invention will become better apparent from the description of a preferred but not exclusive embodiment of a method for handling and simultaneously cutting a plurality of plate pieces on a horizontal machine with a single bridge, and of the machine used therefor, illustrated by way of non-limiting example in the accompanying drawings, wherein:
Figure 1 is a schematic plan view of the machine according to the invention, with a plate to be cut in position;
Figure 2 is a view of the step for cutting a first plate piece;
Figures 3 and 4 are views in succession of the step of rotation in a perpendicular direction and of translation of the first cut plate piece;
Figure 5 is a plan view of the machine with the first plate piece placed at the parking unit;
Figure 6 is a view of the placement of the remaining plate before cutting of the second piece;
Figure 7 is a view of the step for providing the second piece;
Figure 8 is a view of the step for rotating the second plate piece;
Figure 9 is a view of the side-by-side placement of the first and second plate pieces below the cutting bridge;
Figure 10 is a plan view of a first embodiment of the parking unit;
Figure 11 is an elevation view of the parking unit in the inactive position;
Figure 12 is a view of the parking unit in the position for moving away the first plate piece;
Figure 13 is a view of the machine with the first plate piece in a parking region outside the handling region of the remaining plate;
Figures 14 and 15 are a front view and a side view of a parking unit consisting of a pick-up suction table;
Figure 16 is a view of a parking unit with a sucker-type pick-up device;
Figure 17 is a view of a parking unit with pick-up clamps;
Figure 18 is a plan view of the machine with a tilting-surface parking unit;
Figure 19 is a view of the parking unit of Figure 18 with the surface tilted;
Figures 20 and 21 are views in succession of the provision of a first, second and third plate piece to be cut simultaneously;
Figure 22 is a view of a machine with a worktable that is larger than the transverse size of the plate;
Figure 23 is a view of the machine of Figure 22 during the step for combined rotation and translation of the first plate piece;
Figure 24 is a view of the rotated and translated placement of the first plate piece provided;
Figure 25 is a view of the step for obtaining a second plate piece;
Figure 26 is a view of the step for rotating the second plate piece;
Figure 27 is a view of step for the simultaneous cutting of the first and second plate pieces.

With reference to the figures, the horizontal machine with a single cutting bridge for handling and cutting simultaneously a plurality of plate pieces comprises a supporting structure 1, which defines a worktable 2 on which a plate 3 is placed which is made to advance along a longitudinal direction toward a fixed cutting bridge 4, which is arranged diagonally with respect to the longitudinal direction.

On the fixed bridge 4 there is an ordinary cutting head with auxiliary devices which, in a manner known per se, perform the steps for scoring, cut-running, optional heating and opening of the plate pieces that must be obtained by means of a transverse cut from the plate 3.

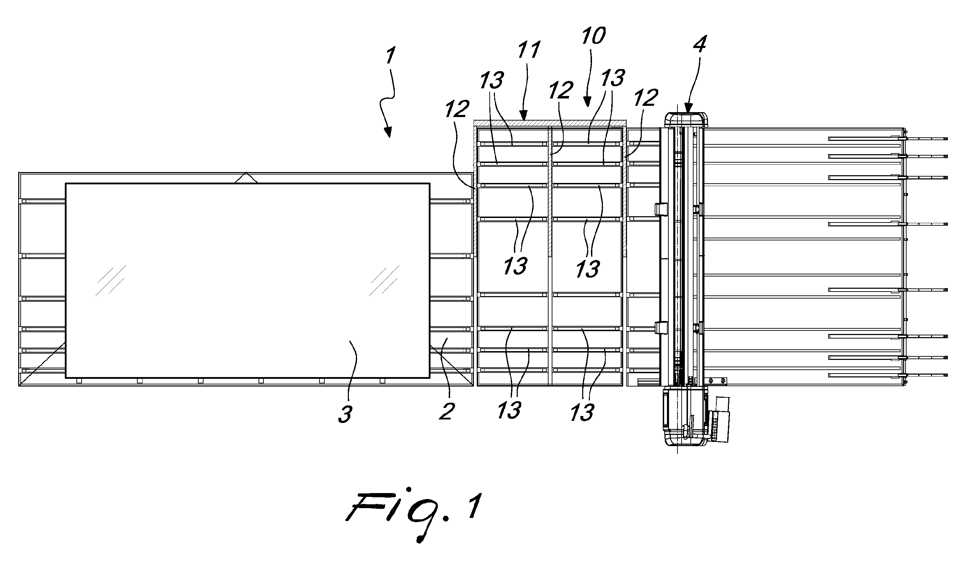

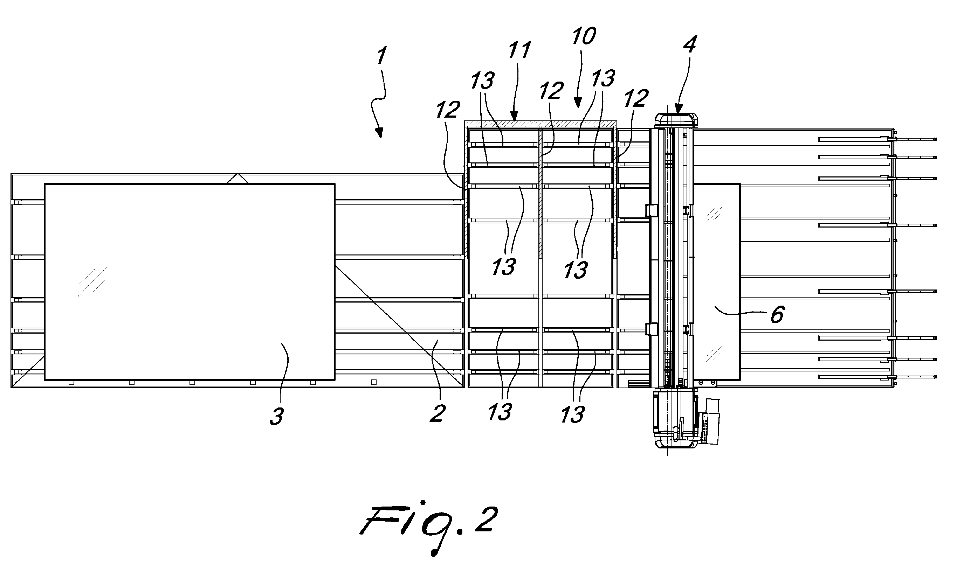

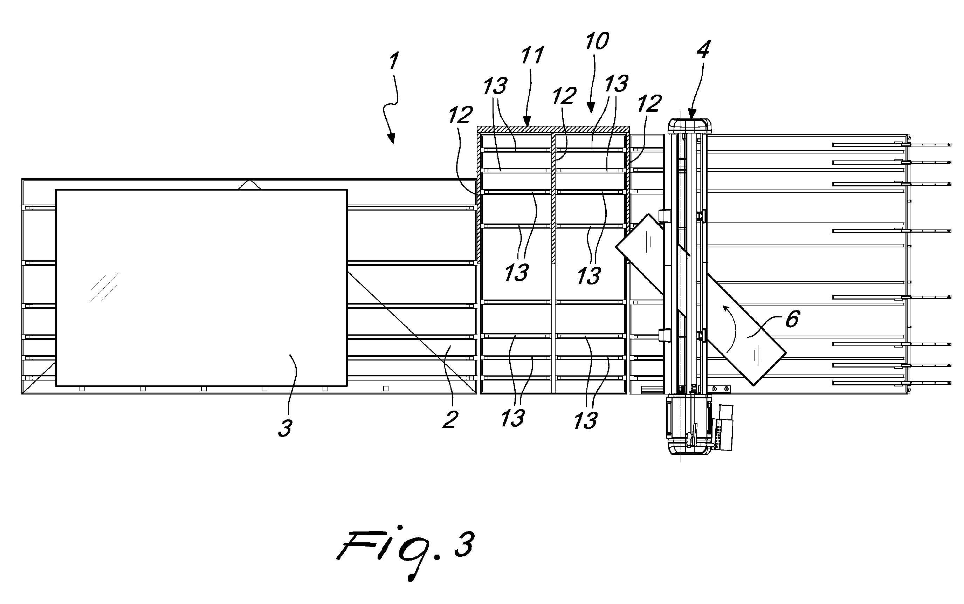

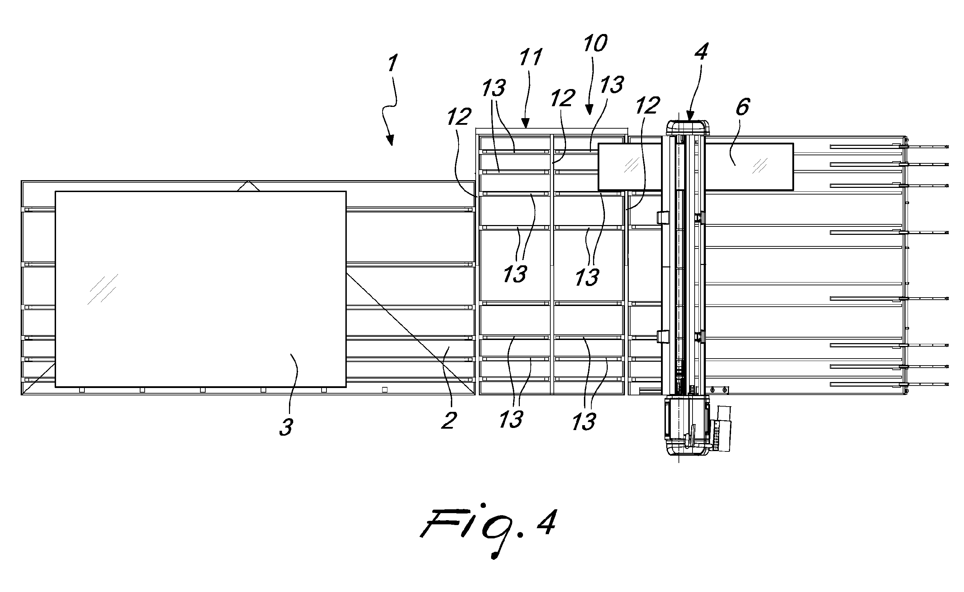

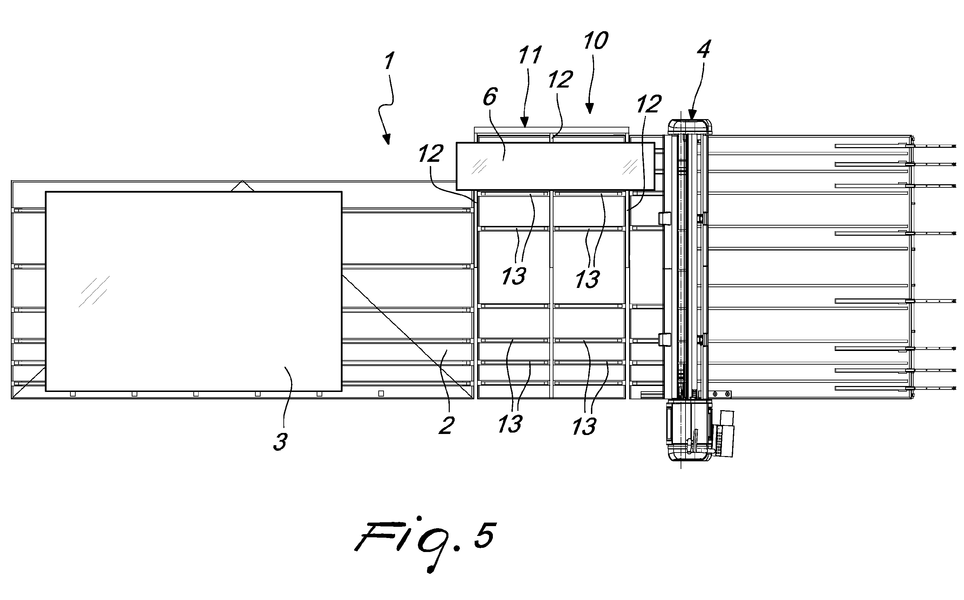

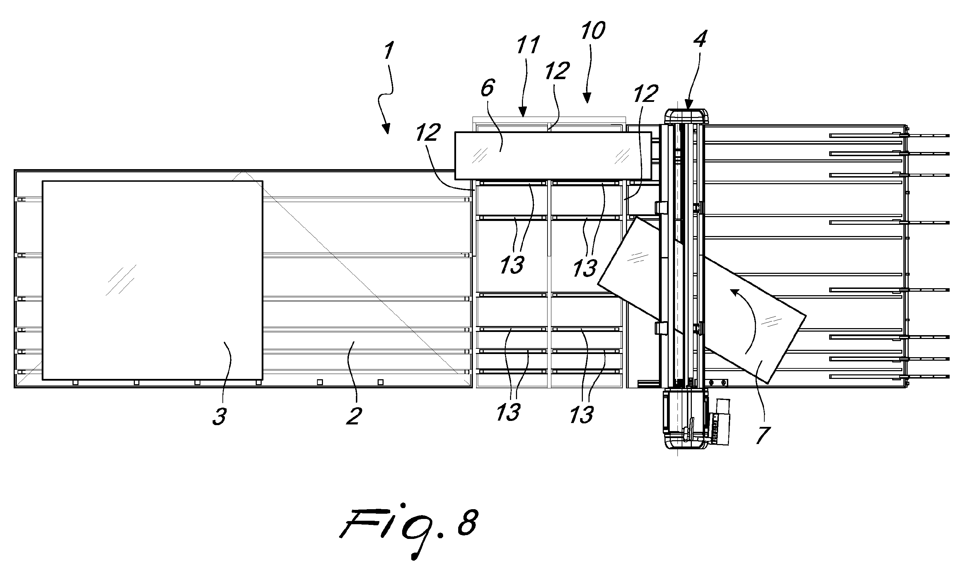

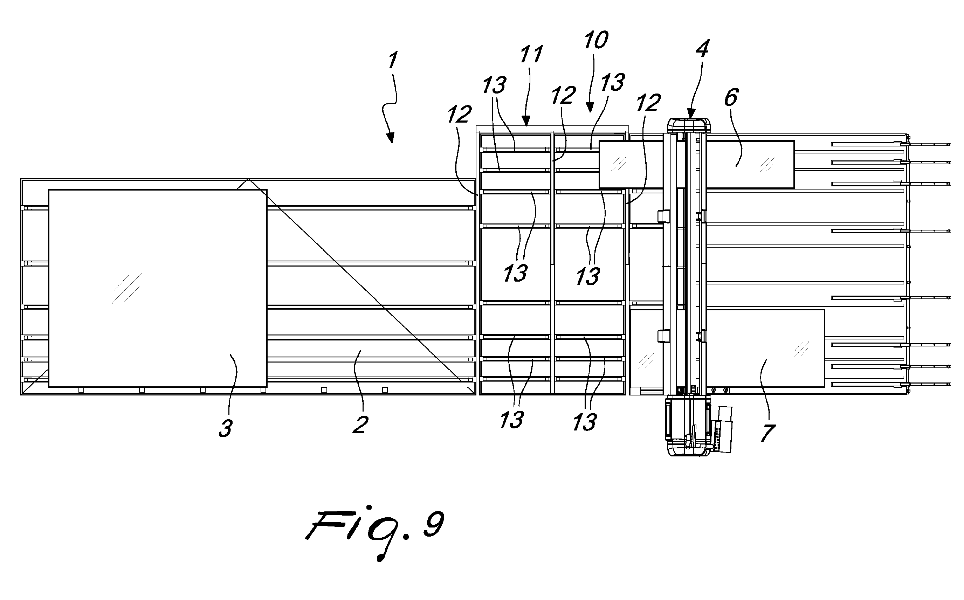

Upstream of the bridge 4, with respect to the transfer direction of the plate 3, a parking unit is provided, generally designated by the reference numeral 10, which according to what has been shown in Figures 1 to 13 has in practice a rack 11 which is movable along a direction which is perpendicular to the worktable and has arms 12 which are interposed between portions of feeder belts 13, which handle the plate and any plate pieces on the worktable 2.

In practical use, the plate 3 is made to move forward so as to provide a first plate piece, designated by the reference numeral 6, which once separated from the remaining part of the plate, which is moved away from the bridge 4 beyond the region affected by the parking unit 10, is rotated substantially by 90° and also translated so as to be placed at the region affected by the pick-up device of the parking unit 10. In practice, the first plate piece 6 undergoes a clockwise or counterclockwise rotation and a translational movement, which is performed simultaneously with the rotation, by using, for example, rotation devices which are disclosed in EPA 08152866.3 and EPA 09158074.6, by the same Applicant, included herein by reference.

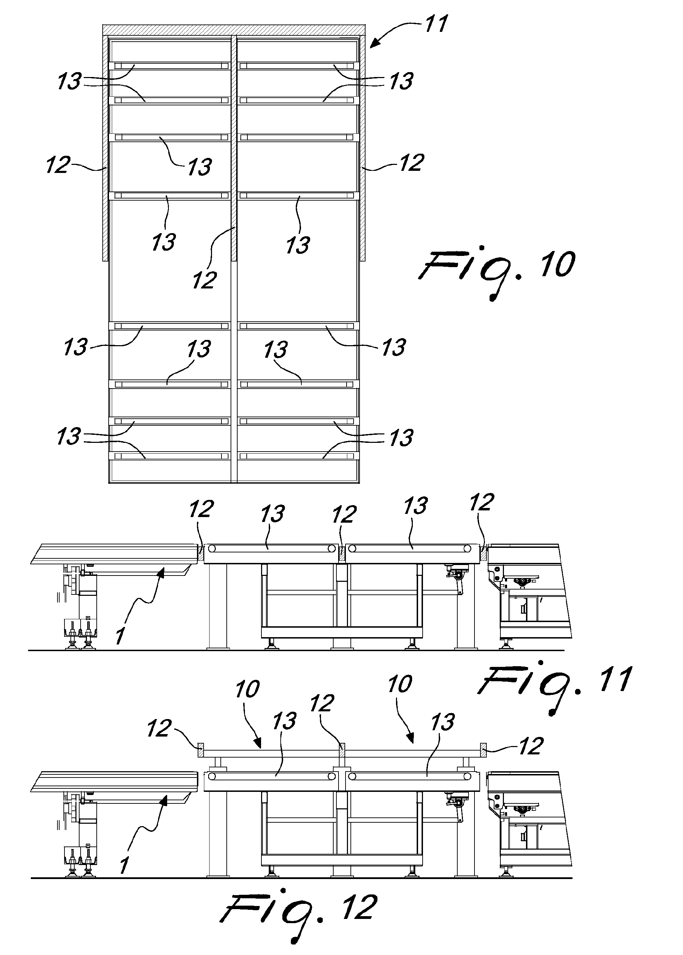

Once the first plate piece has been separated and positioned, by the transfer means provided on the worktable, the piece 6 is placed at the parking unit, which is shown in particular in Figures 10 to 12, and which, once the first plate piece 6 has been positioned, is lifted, in a direction which is substantially perpendicular to the worktable, so as to be moved outside the region affected by the handling of the plate or, more precisely, of the remaining part of the plate.

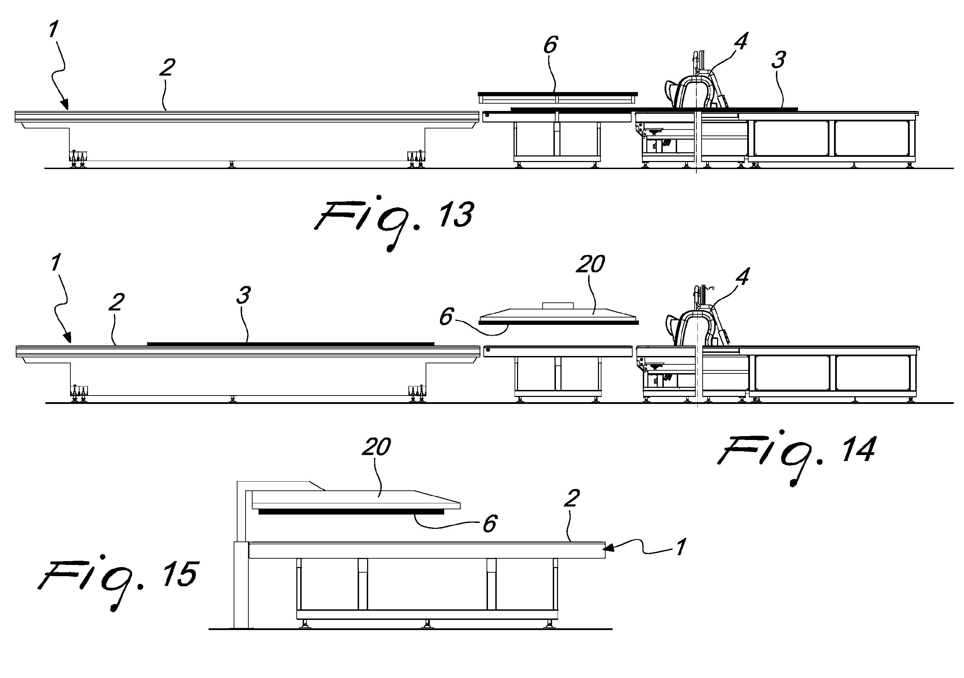

After this, as shown in Figure 13, the remaining plate, again designated by 3, is brought to the bridge 4 for the subsequent cutting operations.

As shown in Figures 14 and 15, the parking unit can be provided by means of a suction table 20, which picks up the first piece 6 and lifts it above the worktable.

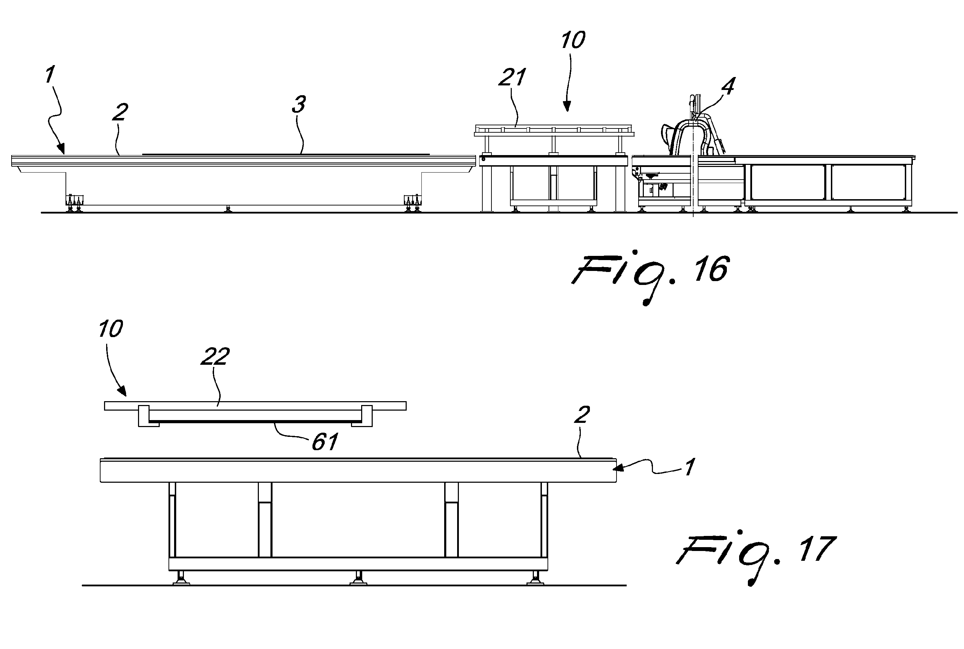

Optionally, the parking unit can be provided by means of a sucker-fitted table, designated by 21 in Figure 16, which lifts the plate or, as is shown in Figure 17, there is a pick-up table 22 with clamps which engage the edges of the plate.

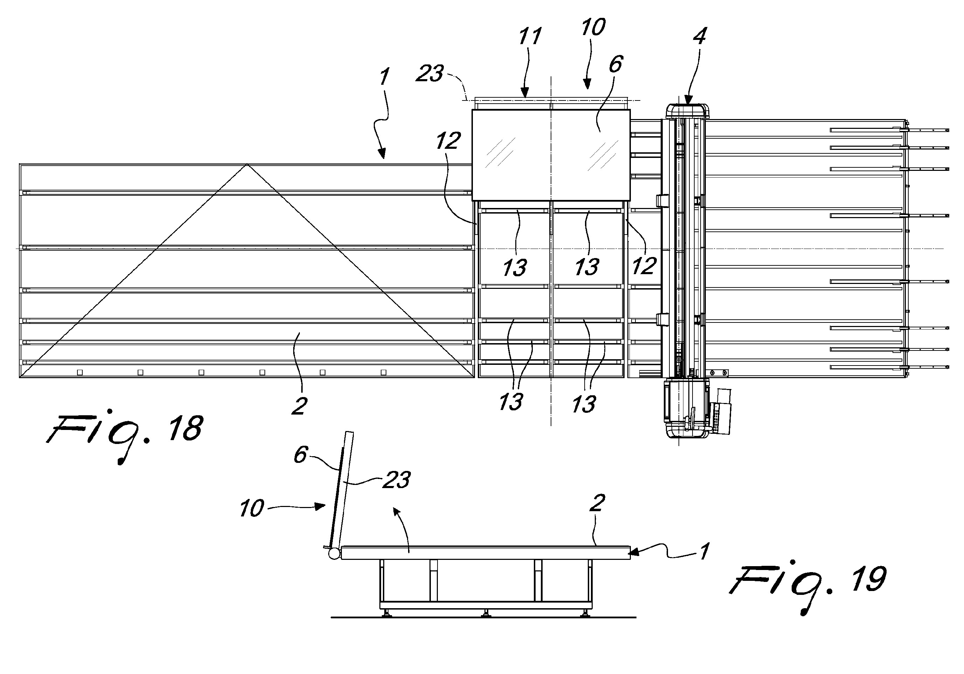

Optionally, the parking unit, as shown in Figures 18 and 19, is provided by means of a tilting table 23, which is rotated so as to lift the plate and move it outside the handling region.

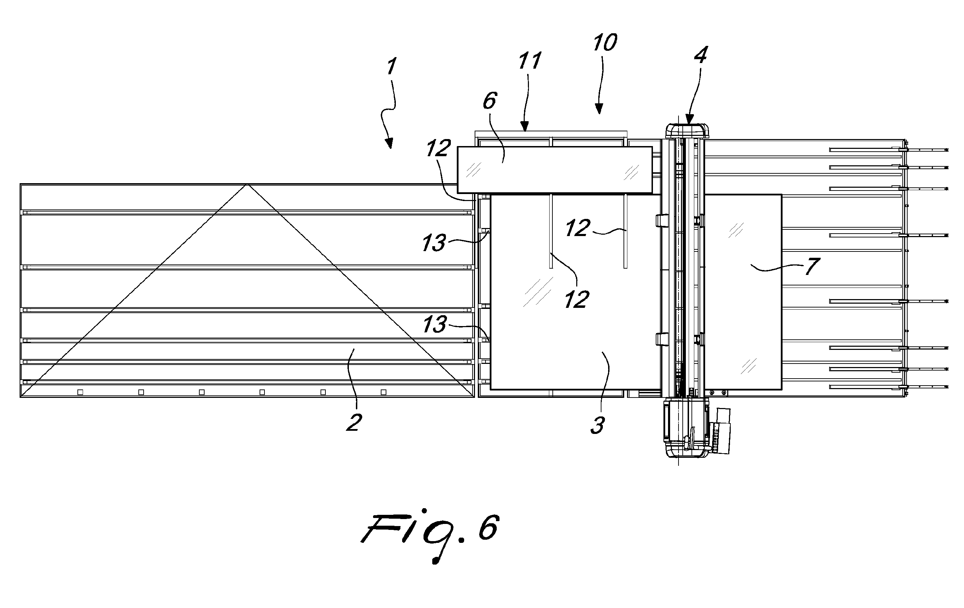

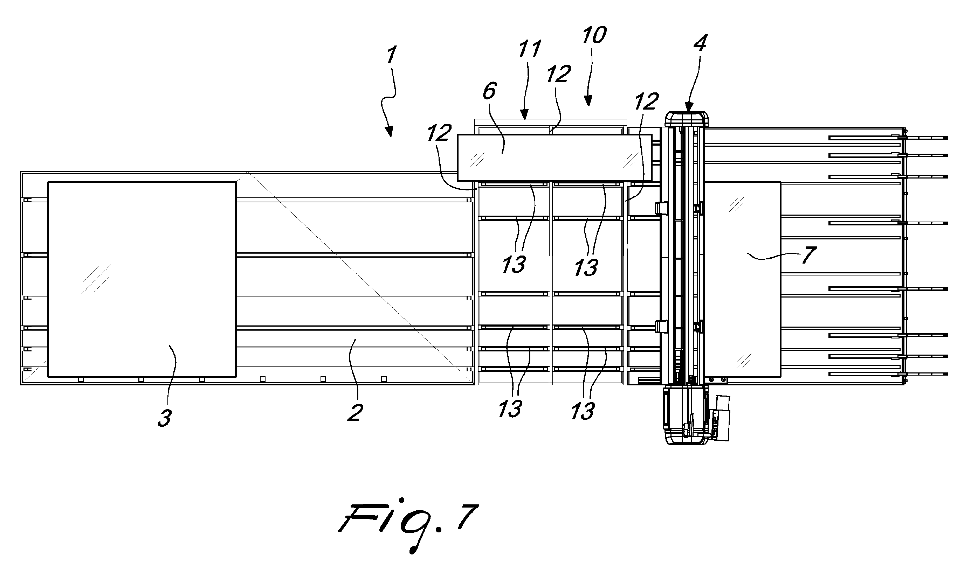

Once the first piece has been cut and moved away, as shown in Figures 6 and 7, the provision of a second plate piece, designated by 7, is performed; said second piece is rotated and translated so as to be able to be arranged side by side with the first piece, arranging them independently of each other thanks to the presence of abutment bridges 30 placed in selected regions of the width of the worktable, so that the first plate piece and the second plate piece can be placed side by side and independently; moreover, it is possible to also having cutting and separating means which are independent of each other.

Once the two pieces have been placed side by side and positioned, simultaneous cutting is performed, i.e., the cutting head performs in a single pass the cutting of the first and the second piece.

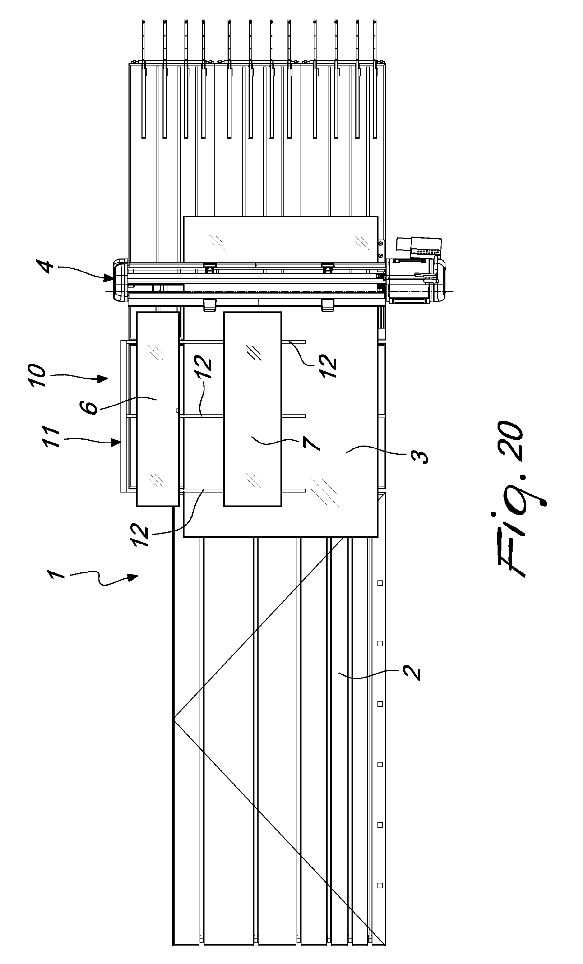

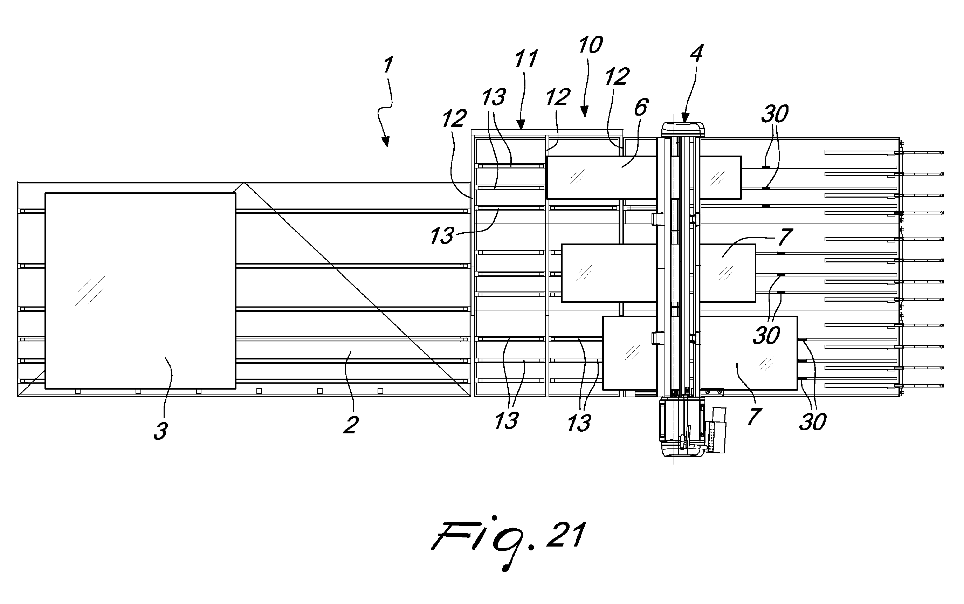

As shown in Figures 20 and 21, attention is called to the possibility of simultaneously cutting three or optionally more plate pieces that are placed side by side, performing in succession the working steps described earlier.

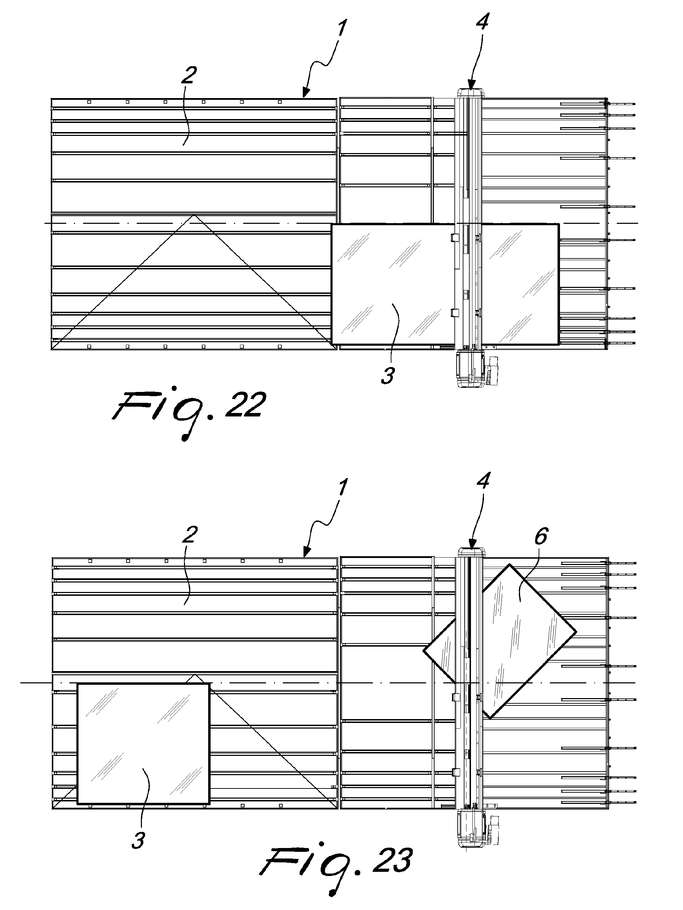

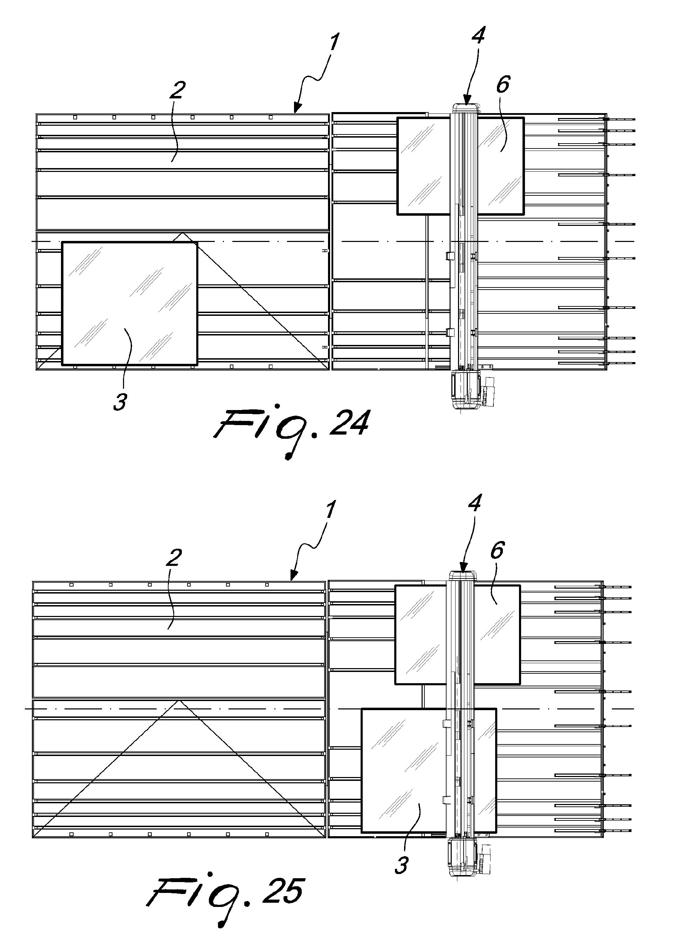

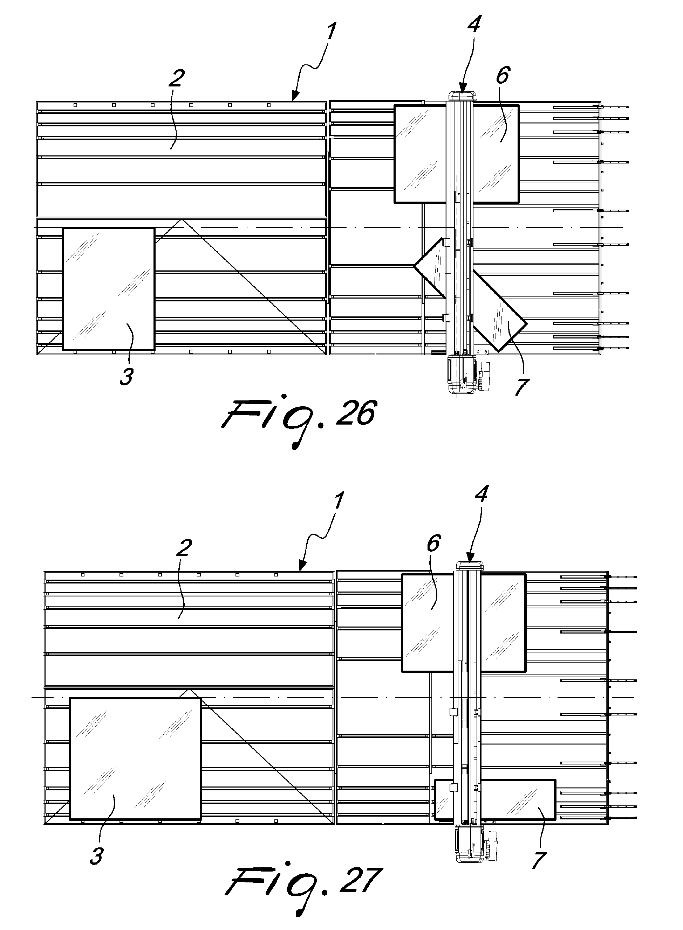

In the embodiment shown in Figures 22 to 27, the parking region is directly provided on a portion of the worktable and, in the specific case, it is possible to use a worktable 2 which is larger than the width of the plate 3, so that it is possible to park the first cut piece 6 in a region outside the handling region of the plate 3, a region that remains side-by-side.

Typically, this is obtainable by using machines that have a useful cutting length which is greater than, or at least equal to, the length of the longer side of commercially available glass plates, which is currently the largest dimension of the plates, cutting plates that have a smaller size.

The fact of providing a machine with such a cutting length offers the advantage of using it with a double working step: by cutting the plates parallel to their longer side, when necessary, or, if allowed by the dimensions of the plate pieces, by cutting a plurality of pieces simultaneously.

From what has been shown it is evident that the invention has achieved the intended aim and objects, and in particular the fact is stressed that a method is provided in which it is possible to obtain the simultaneous cutting of a plurality of plate pieces, despite having a horizontal machine with a single bridge to which in practice, only one parking region is added which can consist of an adapted parking unit, of the type described earlier, or optionally by a region that is laterally adjacent to the region where the plates transit.

It is particularly important that the various plate pieces, by utilizing the devices that are disclosed in the patent applications by the same Applicant referred to earlier, it is possible to easily place the plate piece that is rotated and translated so as to be arranged in a parking region outside the handling region of the plate.

The invention thus conceived is susceptible of numerous modifications and variations, all of which are within the scope of the appended claims.

Moreover, all the details may be replaced with other technically equivalent elements.

In practice, the materials used, as long as they are compatible with the specific use, as well as the contingent shapes and dimensions, may be any according to requirements.

The disclosures in Italian Patent Application No. MI2009A000810 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for handling and cutting simultaneously a plurality of plate pieces on a horizontal machine with a single bridge, which comprises the steps of cutting a first plate piece (6) from a plate (3) made of glass and the like and rotating said first piece (6) substantially by 90°, **characterized in that** it further comprises the steps of placing said first piece (6) in a parking region (10) outside the handling region of said plate (3), cutting and rotating at least one second plate piece (7) substantially by 90°, arranging said first plate piece (6) side by side with respect to said at least one second plate piece (7) with mutually independent placements and performing, with a single pass of the cutting head, the cutting of said first piece (6) and of said at least one second piece (7).

2. The method according to claim 1, **characterized in that** the placement of said first piece (6) outside the handling region of said plate occurs by lifting said first piece (6) with respect to the worktable (2) on which said glass plate (3) is arranged.

3. The method according to one or more of the preceding claims, **characterized in that** the placement of said first piece (6) in a parking region outside the handling region of said plate (3) is provided by placing said first piece (6) in a portion of the worktable (2) that is not affected by the passage of said glass plate.

4. The method according to one or more of the preceding claims, **characterized in that** the placement of said first piece (6) in said parking region outside the handling region of said plate (3) is provided by tilting said first piece (6) with respect to said worktable (2).

5. A horizontal machine with a single bridge for the handling and simultaneous cutting of a plurality of plate pieces, comprising a supporting structure (1) which defines a worktable (2) for feeding a plate (3) along a longitudinal direction which is substantially perpendicular to a fixed cutting bridge (4), which is connected to said supporting structure (1) and supports a cutting head, **characterized in that** comprises a parking unit (10) for placing at least said first piece (6) in a region outside of the handling region of said plate (3).

6. The horizontal machine according to claim 5, **characterized in that** said parking unit (10) comprises a rack (11), which is movable along a direction which is substantially perpendicular to said worktable (2) and has arms (12) which can be interposed between portions of feeder belts (13) provided at the region affected by said rack (11), said arms (12) being placed, in the inactive position, below said portions of feeder belts (13).

7. The horizontal machine according to one or more of claims 5 and 6, **characterized in that** said parking unit (10) comprises a suction table (20) for picking up at least said first piece (6), means for lifting above said worktable (2) being further provided.

8. The horizontal machine according to one or more of claims 5-7, **characterized in that** said parking unit (10) comprises a sucker-fitted table (21) which can perform a translational motion away from said worktable (2).

9. The horizontal machine according to one or more of claims 5-8, **characterized in that** said parking unit (10) comprises a pick-up table (22) with clamps which can engage the edges of said first piece (6) and can perform a translational motion in a direction which is substantially perpendicular to the worktable (2) in order to move away at least said first piece (6).

10. The horizontal machine according to one or more of claims 5-9, **characterized in that** said parking unit (10) comprises a tilting table (23) which can be rotated in order to lift at least said first piece (6) with placement outside of said handling region.

11. The horizontal machine according to one or more of claims 5-10, **characterized in that** comprises, downstream of said fixed cutting bridge (4) with respect to the direction of advancement of said plate, means (30) for the abutment of said plate pieces (6, 7), which can be actuated independently of each other for the independent placement of each one of said plate pieces (6, 7).
